(19) Europäisches Patentamt
European Patent Office
Office européen des brevets

(11) Veröffentlichungsnummer: **0 302 983**
**A2**

(12) **EUROPÄISCHE PATENTANMELDUNG**

(21) Anmeldenummer: **87810527.9**

(22) Anmeldetag: **14.09.87**

(51) Int. Cl.⁴: **A01N 47/36 , //(A01N47/36, 47:30,43:70)**

(30) Priorität: **14.08.87 CH 3131/87**

(43) Veröffentlichungstag der Anmeldung:
**15.02.89 Patentblatt 89/07**

(84) Benannte Vertragsstaaten:
**CH ES FR IT LI**

(71) Anmelder: **CIBA-GEIGY AG**
**Klybeckstrasse 141**
**CH-4002 Basel(CH)**

(72) Erfinder: **Neuenschwander, Ernst, Dr.**
**Moosweg 20**
**CH-4125 Riehen(CH)**
Erfinder: **Rufener, Jacques, Dr.**
**Föhrenweg 33**
**CH-4310 Rheinfelden(CH)**

(54) **Synergistisch wirkendes selektiv-herbizides Mittel für den Getreidebau.**

(57) Ein synergistisch wirkendes selektiv-herbizides Mittel für den Getreidebau, insbesondere für die pre- und post-Anwendung in Winterweizen und Wintergerste besteht aus einem Gemisch von 100-300 Teilen N-(3-Chlor-4-methylphenyl)-N′-dimethylharnstoff, (Chlortoluron), 20-60 Teilen 2-Methylthio-4-äthylamino-6-tert.butylamino-1,3,5-triazin (Terbutryn) und einem Teil N-(2-Chloräthoxyphenylsulfonyl)-N′-(4-methoxy-6-methyl)-1,3,5-triazin-2-yl)harnstoff (Triasulfuron) sowie den in herbiziden Mitteln üblichen inerten Träger- und Dispersionsstoffen. Das neue Mittel zeigt synergistisch überlegene Wirkung gegen Problemunkräuter wie z.B. Lolium gemessen an der Wirkung des bekannten Mittels Chlortoluron-Terbutryn oder Trisulfuron allein. Die Herstellung und die Verwendung des neuen Mittels werden beschrieben.

EP 0 302 983 A2

## Synergistisch wirkendes selektiv-herbizides Mittel für den Getreidebau

Winter- und Frühjahrkulturen von Getreide, insbesondere von Weizen und Gerste weisen im allgemeinen Verunkrautung ganz verschiedenartiger Natur auf. Einerseits handelt es sich um breitblättrige Unkräuter, die den dikotyledonen Pflanzen zuzurechnen sind, anderseits handelt es sich um Gräser, die zu den monokotyledonen Pflanzen gehören. Darunter ist vor allem die Familie der Gramineen verbreitet besonders verschiedene Arten von Lolium.

Die grosse Vielfalt der Unkrautflora welche Getreidekulturen befällt hat es mit sich gebracht, dass auch verschiedene herbizide Wirkstoffe existieren, die gemäss ihren spezifischen Eigenschaften oft hervorragende Ergebnisse zeitigen, aber trotztdem nicht alle Unkrautprobleme überall befriedigend genug zu lösen vermögen, sei es, dass sie auf bestimmte Problemunkräuter nicht genügend ansprechen, sei es, dass sie nicht für pre- und post-emergente Applikation gleichermassen geeignet sind, d.h. dass sich diese Wirkstoffe nicht so universell und flexibel einsetzen wie es der Landwirt wünscht.

Die bisher günstigste Lösung besteht aus einer Wirkstoffmischung von 6 Teilen Chlortoluron und einem Teil Terbutryn.

Chlortoluron ist N-(3-Chlor-4-methylphenyl)-N'-dimethylharnstoff und entspricht der Formel

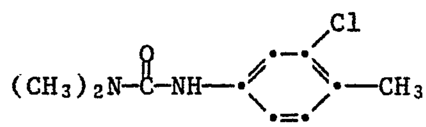

Dieser Wirkstoff ist ein starkes Grasherbizid, insbesondere gegen Wildhaferarten, Alopecurus und Lolium, wirkt hingegen ungenügend gegen Phalaris und gegen dicotyle Unkräuter, wie Veronica, Papaver, Polygonum, Fumaria etc. Ein Vorteil des Chlortolurons ist hingegen wieder, dass es sowohl pre- als auch post-emergent eingesetzt werden kann.

Chlortoluron ist eine bekannte Substanz, deren Herstellung und Eigenschaften z.B. in der FR-PS 2 001 791 beschrieben ist.

Terbutryn ist 2-Methylthio-4-äthylamino-6-tert.butylamino-5-triazin und entspricht der Formel

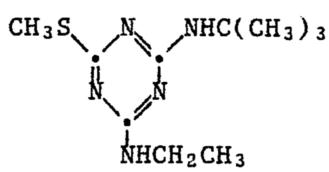

Dieser Wirkstoff ist ebenfalls ein hervorragendes Getreideherbizid. Seine Vorzüge sind gute Wirkung gegen dicotyle Unkräuter, wie Veronica, Polygonum, Papaver und Fumaria sowie die gute Wirkung gegen die grasartigen Unkräuter der Gattungen Alopecurus und Phalaris. Der Nachteil des Terbutryns liegt in seiner relativen Schwäche gegen Wildhafer und Lolium, sowie in der Tatsache, dass es post-emergent nicht oder nur unter speziellen Bedingungen anwendbar ist.

Terbutryn ist eine bekannte Substanz, deren Herstellung und Eigenschaften z.B. in der FR-PS 1 502 307 beschrieben ist.

Die Kombination der beiden Wirkstoffe bildete einen grossen Fortschritt gegenüber der separaten Anwendung dieser Herbizide als Getreidefelder mit Wildhafer und Lolium mit Chlortoluron (pre oder post) behandelt wurden, und Getreidefelder mit überwiegend Phalaris und/oder dicotylen Unkräutern mit Terbutryn pre-emergent behandelt werden.

Man konnte nun beide Unkrautprobleme zusammen in einem Arbeitsgang lösen und es wurde festgestellt, dass die Wirkung der beiden Komponenten sich in diesem Gemisch gegenseitig synergistisch potenzierte, ohne dass dabei die Selektivität für die Kulturen Weizen oder Gerste geringer geworden wäre.

In neuster Zeit sind Sulfonylharnstoff-Herbizide für die Bekämpfung von Unkräutern in Getreidekulturen eingeführt worden. Sie zeichnen sich durch eine sehr starke herbizide Wirkung aus und wirken in äusserst geringen Mengen von 5 bis 100 g Aktivstoff pro Hektar. Sie kontrollieren breitblättrige Unkräuter aber auch gewisse Gräser sehr gut. Sie sollen bei gewissen Kulturen nur im Nachauflaufverfahren eingesetzt werden und ihrer Anwendung sind Grenzen gesetzt, da wegen der Rest-Persistenz im Boden der Nachanbau von

dikotylen Kulturen auf demselben Feld gefährdet sein könnte.

Es wurde nun überraschenderweise gefunden, dass man mit einem herbiziden Mittel, welches als wirksame Komponenten Chlortoluron, Terbutryn und Triasulfuron in einem gegenseitigen Mengenverhältnis von 100-300:20-60:1, insbesondere 200:40:1 oder vorzugsweise 207:42:1 enthält, das Problem der Unkrautbekämpfung in Getreide hervorragend lösen kann, indem dieses Gemisch sowohl pre- als auch postemergent angewendet, sowohl dicotyle Unkräuter als auch monocotyle Unkräuter einschliesslich Lolium, Avena und Phalaris vernichtet, ohne das Getreide zu schädigen, und gegen einzelne Problemunkräuter eine synergistisch gesteigerte Wirkung zeigt, indem es die Problemunkräuter stärker schädigt, als aus der additiven Wirkung der Mengen der Einzelkomponenten zu erwarten gewesen wäre. Man kommt also mit geringeren Gesamtaufwandmengen an Wirkstoff aus, um das gewünschte Ziel der Beseitigung des Unkrautbestandes zu erreichen.

Die vorliegende Erfindung betrifft ein Verfahren zur Herstellung einer solchen herbiziden Mittels als auch ein Verfahren zur Herstellung von unkrautfreien Getreideanbauflächen durch pre- oder post-emergente Behandlung dieser Flächen bezw. des aufgelaufenen Getreides mit diesem neuen Mittel.

Das Verfahren zur Herstellung des neuen Mittels ist dadurch gekennzeichnet, dass man 100 bis 300 Gewichtsteile N-(3-Chlor-4-methylphenyl)-N′-dimethylharnstoff und 20 bis 60 Gewichtsteile 2-Methylthio-4-äthylamino-6-tert.butylamino-1,3,5-triazin sowie 1 Gewichtsteil N-(2-Chloräthoxyphenylsulfonyl)-N′-(4-methoxy-6-methyl-1,3,5-triazin-2-yl)harnstoff mit geeigneten festen oder flüssigen Zuschlags- oder Trägerstoffen einschliesslich oberflächenaktiver Stoffe innig vermengt und vermahlt und in die Form von Streu- und Stäubemittel, Granulate oder insbesondere in Wasser dispergierbare Granulate überführt.

Triasulfuron ist N-(2-Chloräthoxyphenylsulfonyl)-N′-(4-methoxy-6-methyl-1,3,5-triazin-2yl)harnstoff und entspricht der Formel

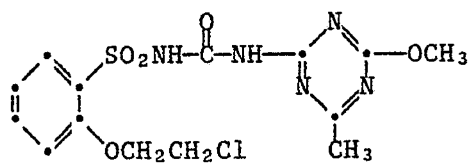

Dieser Wirkstoff ist ein sehr starkes Getreideherbizid und wirkt in Aufwandmengen von 5-25 g pro Hektar gegen fast alle breitblättrigen Unkräuter und in Aufwandmengen von 10-30 g pro Hektar auch gegen verschiedene Gräser wie z.B. Setaria-, Lolium-, Allium-Arten. Er wird pre- und postemergent in Weizenkulturen oder post-emergent in Gerstekulturen verwendet.

Triasulfuron ist eine bekannte Substanz, deren Herstellung und Eigenschaften z.B. in der EP-PS 44 808 beschrieben ist.

Ein grosser Vorteil des erfindungsgemässen Präparates besteht auch darin, dass es in allen Getreideregionen des Landes einsetzbar ist, unabhängig von den auftretenden Unkräutern und, dass es sowohl pre-als auch post-emergent appliziert werden kann. Es bringt also eine bedeutende Vereinfachung für den Verbraucher (Landwirt), sowohl vom Arbeitsaufwand als auch in der Methodik und im Zeitpunkt der Applikation (vor oder nach dem Auflaufen der Saat).

Die Verwendung des erfindungsgemässen Mittels mit drei Komponenten zur selektiven Unkrautbekämpfung in Getreidekulturen speziell solchen von Weizen und Gerste zeigt wesentliche unvorhergesehene Vorteile gegenüber der Verwendung der Mischung von Chlortoluron und Terbutryn oder gegenüber der Verwendung des herbiziden Sulfonylharnstoffes Triasulfuron allein.

Die Gerste kann auch im Vorauflaufverfahren behandelt werden, was mit der Kombination aus Chlortoluron und Terbutryn nicht möglich war. In der Bekämpfung von Gramineen-Gräsern welche morphologisch den Kulturen nahestehen, wurden grosse Erfolge erzielt. Speziell gelingt es die Lolium-Arten besser zu bekämpfen als mit der Chlortoluron-Terbutryn-Kombination.

Es wird eine verbesserte allgemeine Bekämpfung der dikotylen Unkräuter erreicht vor allem wenn die erfindungsgemässe Mischung im Vorauflaufverfahren angewendet wird.

Schliesslich kann mit kleineren Mengen gearbeitet werden als sie benützt werden, wenn man die bekannte Chlortoluron-Terbutryn-Kombination benutzt oder man kommt anteilmässig mit einer viel kleineren Menge des Sulfonylharnstoff Triasulfuron aus als wenn man diesen allein einsetzen würde. Dies hat nicht nur oekologische und oekonomische Vorteile sondern verringert auch die Möglichkeit durch zu grosse Aufwandmengen des Herbizides phytotoxische Schäden an Kulturen zu verursachen oder Resistenz-Probleme mit dikotylen Nachfoalgekulturen zu verursachen.

Die Aufwandmengen an Gesamtwirkstoff betragen üblicherweise 0,5 bis 2 kg pro Hektar Anbaufläche.

Mit 0,6 bis 1,5 kg/ha in Form von wässerigen Spritzpulver-Dispersionen sind schon durchaus zufriedenstellende Resultate erzielbar. Die Mittel können z.B. vorzugsweise als 80%-ige Spritzpulver oder wasserdispergierbare Granulate in den Handel gebracht werden.

Die Herstellung erfindungsgemässer Mittel erfolgt in an sich bekannter Weise durch inniges Vermischen und Vermahlen der Wirkstoffe mit geeigneten Trägerstoffen. Zur Erhöhung der Aufnahmefähigkeit des Gemisches durch die Pflanzen werden oberflächenaktive Stoffe in das Mittel eingearbeitet. Die Wirkstoffe können in den folgenden Aufarbeitungsformen vorliegen und angewendet werden:

Stäubemittel, Streumittel, Streugranulate wie Umhüllungsgranulate, Imprägnierungsgranulate und Homogengranulate, Spritzpulver (wettable powder) und dispergierbare Granulate.

Als besonders geeignet haben sich wasserdispergierbare Granulate erwiesen.

Zur Herstellung fester Aufarbeitungsformen (Stäubemittel, Streumittel, Granulate) werden die Wirkstoffe mit festen Trägerstoffen vermischt. Als Trägerstoffe kommen zum Beispiel Kaolin, Talkum, Bolus, Löss, Kreide, Kalkstein, Kalkgrits, Ataclay, Dolomit, Diatomeenerde, gefällte Kieselsäure, Erdalkalisilikate, Natrium- und Kaliumaluminiumsilikate (Feldspäte und Glimmer), Calcium- und Magnesiumsulfate, Magnesiumoxid, gemahlene Kunststoffe, Düngemittel, wie Ammoniumsulfat, Ammoniumphosphat, Ammoniumnitrat, Harnstoff, gemahlene pflanzliche Produkte, wie Getreidemehl, Baumrindemehl, Holzmehl, Nusschalenmehl, Cellulosepulver, Rückstände von Pflanzenextraktionen, Aktivkohle, andere adsorptive Träger wie hochdisperse Harnstoff-Formaldehyd-Polykondensationsprodukte mit grosser innerer Oberfläche etc., je für sich oder als Mischungen untereinander in Frage.

Die Korngrösse der Trägerstoffe beträgt für Stäubemittel zweckmässig bis ca. 0.1 mm für Granulate 0,2 mm oder mehr.

Die Wirkstoffkonzentrationen in den festen Aufarbeitungsformen betragen 0,5 bis 80 %.

Diesen Gemischen können ferner den Wirkstoff stabilisierende Zusätze und/oder nichtionische, anionenaktive und kationenaktive Stoffe zugegeben werden, die beispielsweise die Haftfestigkeit der Wirkstoffe auf Pflanzen und Pflanzenteilen verbessern (Haft- und Klebemittel) und/oder eine bessere Benetzbarkeit (Netzmittel) sowie Dispergierbarkeit (Dispergatoren) gewährleisten. Als Klebemittel kommen beispielsweise die folgenden in Frage: Olein-Kalk-Mischung, Cellulosederivate (Methylcellulose, Carboxymethylcellulose), Hydroxyäthylenglykoläther von Mono- und Dialkylphenolen mit 5 bis 15 Aethylenoxidresten pro Molekül und 8 bis 9 Kohlenstoffatomen im Alkylrest, Ligninsulfonsäure, deren Alkali- und Erdalkalisalze, Polyäthylenglykoläther (Carbowaxe), Fettalkoholpolyglykoläther mit 5 bis 20 Aethylenoxidresten pro Molekül und 8 bis 18 Kohlenstoffatomen im Fettalkoholteil, Kondensationsprodukte von Aethylenoxid, Propylenoxid, Polyvinylpyrrolidone, Polyvinylalkohole, Kondensationsprodukte von Harnstoff-Formaldehyd sowie Latex-Produkte.

In Wasser dispergierbare Wirkstoffkonzentrate, d.h. Spritzpulver (wettable powder) oder wasserdispergierbare Granulate stellen Mittel dar, die mit Wasser auf jede gewünschte Konzentration verdünnt werden können. Sie bestehen aus Wirkstoff, Trägerstoff, gegegebenenfalls den Wirkstoff stabilisierenden Zusätzen, oberflächenaktiven Substanzen und Antischaummitteln. Die Wirkstoffkonzentration in diesen Mitteln beträgt 5 bis 80 %.

Die Spritzpulver (wettable powder) werden erhalten, indem man die Wirkstoffe mit Dispergierungsmitteln und pulverförmigen Trägerstoffen in geeigneten Vorrichtungen bis zur Homogenität vermischt und vermahlt. Als Trägerstoffe kommen beispielsweise die vorstehend für die festen Aufarbeitungsformen erwähnten in Frage. In manchen Fällen ist es vorteilhaft, Mischungen verschiedener Trägerstoffe zu verwenden. Als Dispergatoren können beispielsweise verwendet werden: Kondensationsprodukte von sulfoniertem Naphthalin und sulfonierten Naphthalinderivaten mit Formaldehyd, Kondensationsprodukte des Naphthalins bzw. der Naphthalinsulfonsäuren mit Phenol und Formaldehyd sowie Alkali-, Ammonium- und Erdalkalisalze von Ligninsulfonsäure, weiterer Alkylarylsulfonate, Alkali- und Erdalkalimetallsalze der Dibutylnphthalinsulfonsäure, Fettalkoholsulfate, wie Salze sulfatierter Hexadecanole, Heptadecanole und Salze von sulfatiertem Fettalkoholglykoläther, das Natriumsalz von Oleylmethyltaurid, ditertiäre Aethylenglykole, Dialkyldilaurylammoniumchlorid und fettsaure Alkali- und Erdalkalisalze.

Als Antischaummittel kommen zum Beispiel Silicone in Frage.

Die Wirkstoffe werden mit den oben aufgeführten Zusätzen so vermischt, vermahlen, gesiebt und passiert, dass der feste Anteil eine Korngrösse von 0,02 bis 0,04 nicht überschreitet.

Die erfindungsgemässen Mittel können im Falle von Streugranulaten und wasserdispergierbaren Granulaten z.B. nach dem Extrusions-Mischer- oder Sprühtrocknungsverfahren hergestellt werden. Die verschiedenen Komponenten werden vor dem eigentlichen Vermahlen so lange z.B. miteinander vermengt bis dass Homogenität vorliegt. Vorzugsweise wird dabei Chlortoluron vorgemahlen, z.B. in einer Luftstrahlmühle, und am Schluss zu den übrigen Komponenten gegeben. Das Mittel wird vor dem eigentlichen Granulieren z.B. in einer Luftstrahlmühle fein gemahlen. Das Granulieren erfolgt z.B. in einem sogenannten

Mischgranulator oder einem Lödigemischer in feuchtem bis nassem Zustand. Das Rohgranulat kann in einem Wirbelschichttrockner oder einem Vakuumtrockenschrank bis zu einer Restfeuchtigkeit von unter 1,5 bis 3 % bei 40 bis 80 °C getrocknet werden.

Im folgenden werden Ausführungsformen des neuen Mittels beschrieben. Teile bedeuten Gewichtsteile.

Streugranulat:

Zur Herstellung eines 6%-igen Granulates werden folgende Stoffe verwendet:

5 Teile Chlortoluron
1 Teil Terbutryn
0.025 Teile Triasulfuron
0,25 Teile epoxydiertes Kokosnussöl
0,25 Teile Cetylpolyglycoläther
3,5 Teile Polyäthylenglycol
89,075 Teile Kaolin (Korngrösse 0,3 bis 0,8 mm)

Die Aktivsubstanzen werden mit dem epoxydierten Kokosnussöl vermischt und in 6 Teilen Aceton gelöst, hierauf wird Polyäthylenglykol und Cetylpolyglykoläther zugesetzt. Die so erhaltene Lösung wird auf Kaolin aufgesprüht und anschliessend wird im Vakuum das Aceton verdampft.

Wasserdispergierbare Granulate

Zu ihrer Herstellung werden folgende Bestandteile verwendet:

a)

50 Teile Chlortoluron
9 Teile Terbutryn
0,5 Teile Triasulfuron
5 Teile eines anionischen Tensids z.B. Na-Dibutylnaphthalinsulfonat
12 Teile Sulfitablauge
23,5 Teile Kaolin

b)

53 Teile Chlortoluron
11 Teile Terbutryn
0,25 Teile Triasulfuron
5 Teile Na-Dibutylnaphthalinsulfonat
4 Teile Maleinsäureanhydrid-Isobutylen-Copolymerisat-Na-salz
5 Teile $Na_2SO_4$
5 Teile eines adsorptiven Trägers, z.B. hochdisperse Harnstoff-Formaldehyd-Polykondensationsprodukt mit grosser innerer Oberfläche
10 Teile Sulfitablauge
6,75 Teile Kaolin

Spritzpulver (wettable powder)

Zur Herstellung eines a) 80%-igen und b) 50%-igen Spritzpulvers werden folgende Bestandteile verwendet:

a)

66,25 Teile Chlortoluron
13,43 Teil Terbutryn
0.132 Teile Triasulfuron
5,0 Teile Natriumlaurylsulfat
4,5 Teile Naphthalinsulfonsäure-Phenolsulfonsäuren-Formaldehyd-Kondensat 3:2:1
10,5 Teile gefällte kolloidale Kieselsäure

b)

41,4 Teile Chlortoluron
8,4 Teile Terbutryn
0,2 Teile Triasulfuron
5,0 Teile Natriumdibutylnaphthylsulfonat oder Natrium-ligninsulfonat
3 Teile Naphthalinsulfonsäuren-Formaldehyd-Kondensat
20 Teile Kaolin
22 Teile Kreide

Die beiden Wirkstoffe werden auf die entsprechenden Trägerstoffe (Kaolin, Kreide, Kieselsäure) aufgezogen und anschliessend vermischt und fein vermahlen. Man erhält so Spritzpulver von vorzüglicher Benetzbarkeit und Schwebefähigkeit. Aus solchen Spritzpulvern können durch Verdünnen mit Wasser Suspensionen jeder gewünschten Wirkstoffkonzentration erhalten werden.

Zum Nachweis der besseren Wirkung des erfindungsgemässen Mittels wurden folgende Freilandversuche durchgeführt.

Beispiel 1:

Bekämpfung von Lolium rigidum sowie breitblättriger Unkräuter in Getreidekulturen im Vorauflaufverfahren.

1.1. Auf einem Feld wird im Oktober Winterweizen der Sorte "Astral" gesät und das Feld dann in Parzellen aufgeteilt. Die Parzellen werden am gleichen Tag mit verschiedenen Wirkstoffen oder Wirkstoffgemischen gespritzt. Einzelne Parzellen bleiben unbehandelt und dienen als Kontrolle. Nach 5 Monaten, im März des folgenden Jahres werden die Parzellen begutachtet und der Zustand des Getreides und der wichtigsten Unkräuter auf Schäden evaluiert.

0 % die Pflanze gedeiht wie in unbehandelten Kontrollparzellen
1-99 % Zwischenstufen der Schädigung
100 % Totalschaden, Pflanzen abgestorben.

Die Resultate sind in der untenstehenden Tabelle zusammengefasst.

| Wirkstoff oder Wirkstoffkombination | Aufwandmenge g/Hektar | Weizen "Astral" | Lolium rigidum | Sinapis arvensis | Veronica hederifolia | Lamium amplexicaule |
|---|---|---|---|---|---|---|
| Chlortoluron + Terbutryn (6:1) | 1500 (1286 + 214) | 0 | 90 | 87 | 47 | 92 |
| Triasulfuron | 10 | 0 | 70 | 100 | 95 | 89 |
| Chlortoluron + Terbutryn + Triasulfuron | 800 (662,5 + 134,3 + 3,2) | 0 | 90 | 100 | 93 | 95 |
| Chlortoluron + Terbutryn + Triasulfuron | 1000 (882 + 168 + 4) | 0 | 92 | 100 | 94 | 100 |
| Chlortoluron + Terbutryn + Triasulfuron | 1200 (993,75 + 201,45 + 4,8) | 0 | 98 | 100 | 98 | 100 |
| Kontrolle | --- | 0 | 0 | 0 | 0 | 0 |

1.2. Ein Feld wird im Oktober mit Wintergerste die Sorte "Alfa" besät und dann in Parzellen aufgeteilt. Eine Woche nach der Saat werden die Parzellen mit Wirkstoff oder Wirkstoffgemischen behandelt. Einige Parzellen bleiben unbehandelt und dienen als Kontrolle. Der Versuch wird im März des folgenden Jahres, nach 5 Monaten ausgewertet und der Zustand der Gerste und des Ungrases Lolium rigidum beurteilt. Die Resultate sind in der untenstehenden Tabelle zusammengefasst:

| Wirkstoff oder Wirkstoffkombination | Aufwandmenge g/Hektar | % Schäden | |
|---|---|---|---|
| | | Gerste "Alfa" | Lolium rigidum |
| Chlortoluron + Terbutryn (6:1) | 1500 (1286 + 214) | 0 | 91 |
| Triasulfuron | 10 | 12 | 88 |
| Chlortoluron + Terbutryn + Triasulfuron | 800 (662,5 + 134,3 + 3,2) | 0 | 94 |
| Chlortoluron + Terbutryn + Triasulfuron | 1000 (828 + 168 + 4) | 0 | 97 |
| Chlortoluron + Terbutryn + Triasulfuron | 1200 (993,75 + 201,45 + 4,8 | 5 | 98 |
| Kontrolle | --- | 0 | 0 |

1.3. Im Oktober wurde Winterweizen der Sorte "Capitole" gesät. Das Feld wurde dann in Parzellen aufgeteilt und diese 6 Tage nach der Saat mit dem Wirkstoff oder den Wirkstoffgemischen gespritzt. Einzelne Parzellen blieben unbehandelt und dienten als Kontrolle. Der Erfolg wurde 5 Monate danach im März des darauffolgenden Jahres begutachtet indem man den Schaden am Getreide und an den meist verbreiteten Unkräutern Raphanus raphanistrum und Spergularia rubra bewertete. Die Resultate sind in der untenstehenden Tabelle zusammengefasst:

| Wirkstoff oder Wirkstoffkombination | Aufwandmenge g/Hektar | Weizen "Capitole" | % Schaden Raphanus raphanistrum | Spergularia rubra |
|---|---|---|---|---|
| Chlortoluron + Terbutryn (6:1) | 1500 (1286 + 214) | 3 | 80 | 85 |
| Triasulfuron | 10 | 6 | 93 | 100 |
| Chlortoluron + Terbutryn + Triasulfuron | 800 (662,5 + 134,3 + 3,2) | 5 | 93 | 100 |
| Chlortoluron + Terbutryn + Triasulfuron | 1000 (828 + 168 + 4) | 3 | 98 | 100 |
| Chlortoluron + Terbutryn + Triasulfuron | 1200 993,75 + 201,45 + 4,8 | 5 | 100 | 100 |
| Kontrolle | --- | 0 | 0 | 0 |

1.4. In einem weiteren Versuch wurde im Oktober Winterweizen der Sorte "Anza" gesät. Das Feld wurde in Parzellen aufgeteilt und 9 Tage nach der Saat wurden die Parzellen mit dem Wirkstoff oder einer der Wirkstoffkombinationen behandelt. Nach 5 Monaten, im März des folgenden Jahres wurde der Erfolg der Behandlung begutachtet indem man die Schäden am Weizen und an 5 der am meisten verbreiteten Gräser und Unkräuter bewertet. Die Resultate sind in der untenstehenden Tabelle zusammengefasst.

| Wirkstoff oder Wirkstoffkombination | Aufwandmenge g/Hektar | % Schaden | | | | | |
|---|---|---|---|---|---|---|---|
| | | Weizen "Anza" | Lolium rigidum | Galium aparine | Papaver roheas | Polygonum aviculare | Fumaris officinalis |
| Chlortoluron + Terbutryn (6:1) | 1500 (1286 + 214) | 0 | 97 | 0 | 94 | 93 | 85 |
| Triasulfuron | 10 | 5 | 85 | 95 | 98 | 40 | 70 |
| Chlortoluron + Terbutryn + Triasulfuron | 800 (662,5 + 134,3 + 3,2) | 3 | 98 | 86 | 100 | 95 | 100 |
| Chlortoluron + Terbutryn + Triasulfuron | 1200 (993,75 + 201,45 + 4,8) | 3 | 100 | 94 | 100 | 100 | 100 |
| Kontrolle | --- | 0 | 0 | 0 | 0 | 0 | 0 |

In diesen Versuchen wurde mit kleineren Aufwandmengen (50 - 80 %) der erfindungsgemässen Mittel eine verbesserte Unkrautkontrolle erreicht als mit der bekannten binären Wirkstoff-Kombination. Die Gerste zeigt im Gegensatz zur Behandlung mit Triasulfuron keine oder geringere Schädigung.

Beispiel 2:

Bekämpfung von wilden Gräsern sowie von Unkräutern in Getreidekulturen im Nachauflaufverfahren

2.1. Auf einem Feld wurde im Oktober mit Wintergerste der Sorte "Hatif de Grignon" gesät. Nachdem die Saat gekeimt hat, Mitte Januar des darauffolgenden Jahres und die jungen Pflanzen das Stadium von 3 Blattern und 2 Knoten erreicht hatte wurde das Feld in Parzellen aufgeteilt und die Parzellen mit dem Wirkstoff oder einem Wirkstoffgemisch handelt. Einzelne Parzellen blieben unbehandelt und dienten als Kontrolle. Der Erfolg der Behandlung wurde zwei Monate später Mitte Mai begutachtet, indem man die Schäden an der Gerste und am Leitunkraut Veronica hederofilia beweitete.

| Wirkstoff oder Wirkstoffkombination | Aufwandmenge g/Hektar | % Schaden | |
|---|---|---|---|
| | | Gerste "Hatif de" | Veronica hederifolia |
| Chlortoluron + Terbutryn (6:1) | 1500 (1286 + 214) | 5 | 88 |
| Triasulfuron | 10 | 2 | 75 |
| Chlortoluron + Terbutryn + Triasulfuron | 800 (662,5 + 134,3 + 3,2) | 0 | 98 |
| Chlortoluron + Terbutryn + Triasulfuron | 1000 (993,75 + 201,45 + 4,8 | 0 | 98 |
| Kontrolle | --- | 0 | 0 |

2.2. In einem ähnlich Versuch wurde Winterweizen der Sorte "Anza" im Monat Januar gesät. Anfangs März, wenn die Kultur gekeimt hatte und die Unkräuter sich zwischen Keimblatt und 4. Blatt-Stadium befanden, wurde das Feld in Parzellen aufgeteilt und jede Parzelle mit dem Wirkstoff oder einem der Wirkstoffgemische behandelt. Einzelne Parzellen blieben unbehandelt und dienten der Kontrolle. Der Erfolg der Behandlung wurde 3 Monate später im Juni begutachtet indem man die Schäden an der Gerste und an den 4 wichtigsten Unkräutern bewertete. Die Resultate sind in der untenstehenden Tabelle festgehalten.

| Wirkstoff oder Wirkstoffkombination | Aufwandmenge g/Hektar | % Schaden | | | | |
|---|---|---|---|---|---|---|
| | | Weizen "Anza" | Lolium rigidum | Papver roheas | Polygonum aviculare | Raphanus raphanistrum |
| Chlortoluron + Terbutryn (6:1) | 1500 (1286 + 214) | 1 | 85 | 100 | 98 | 100 |
| Triasulfuron | 10 | 1 | 40 | 100 | 35 | 100 |
| Chlortoluron + Terbutryn + Triasulfuron | 800 (662,5 + 134,3 + 3,2) | 2 | 83 | 100 | 100 | 100 |
| Chlortoluron + Terbutryn + Triasulfuron | 1200 (993,75 + 201,45 + 4,8) | 2 | 88 | 100 | 100 | 100 |
| Kontrolle | --- | 0 | 0 | 0 | 0 | 0 |

2.3. Wintergerste der Sorte "Dobla" wurde im Oktober gesät. Die Kultur wurde in Parzellen aufgeteilt und die Parzellen im November, einen Monat nach der Saat behandelt, wenn sich die Kultur und die Gräser im Zustand der Keimung befanden und die breitblättrigen Unkräuter eine Höhe von 2-4 cm erreicht hatten. Einzelne Parzellen blieben unbehandelt und dienten als Kontrolle. Der Versuch wurde nach 5 Monaten, Ende April begutachtet indem man den Schaden an der Gerste, dem Gras Lolium rigidum und dem verbreitetsten Unkraut Matricaria sp bewertete. Die Resultate sind in der untenstehenden Tabelle zusammengefasst.

| Wirkstoff oder Wirkstoffkombination | Aufwandmenge g/Hektar | Weizen "Dobla" | Lolium rigidum | Matricaria sp. |
|---|---|---|---|---|
| Chlortoluron + Terbutryn (6:1) | 1500 (1286 + 214) | 10 | 92 | 99 |
| Triasulfuron | 10 | 10 | 40 | 98 |
| Chlortoluron + Terbutryn + Triasulfuron | 800 (662,5 + 134,3 + 3,2) | 5 | 85 | 100 |
| Chlortoluron + Terbutryn + Triasulfuron | 1000 (828 + 168 + 4) | 3 | 92 | 100 |
| Chlortoluron + Terbutryn + Triasulfuron | 1200 (993,75 + 201,45 + 4,8) | 10 | 94 | 100 |
| Kontrolle | --- | 0 | 0 | 0 |

2.4. Im November wurde Wintergerste der Sorte "Robur" gesät. Im Februar des folgenden Jahres, wenn die Kultur zu spriessen begann und die Unkräuter sich im Frühstadium (1-5 cm Höhe) befanden, wurde das Feld in Parzellen aufgeteilt und mit dem Wirkstoff oder einem der Wirkstoffgemische behandelt. Einzelne Parzellen blieben unbehandelt und dienten als Kontrolle. Der Versuch wurde nach zwei Monaten im April begutachtet und die Schäden an Gerste, dem Gras Lolium rigidum und den Unkräutern Papaver rhoeas und Veronica hederifolia bewertet. Die Resultate sind in der untenstehenden Tabelle zusammengefasst.

| Wirkstoff oder Wirkstoffkombination | Aufwandmenge g/Hektar | % Schaden | | | |
|---|---|---|---|---|---|
| | | Gerste "Robur" | Lolium rigidum | Papaver roheas | Veronica hederifolia |
| Chlortoluron + Terbutryn (6:1) | 1500 (1286 + 214) | 0 | 98 | 99 | 98 |
| Triasulfuron | 10 | 0 | 65 | 100 | 57 |
| Chlortoluron + Terbutryn + Triasulfuron | 800 (662,5 + 134,3 + 3,2) | 0 | 99 | 100 | 100 |
| Chlortoluron + Terbutryn + Triasulfuron | 1000 (828 + 168 + 4) | 0 | 98 | 100 | 100 |
| Chlortoluron + Terbutryn + Triasulfuron | 1200 (993,75 + 201,45 + 4,8) | 0 | 99 | 100 | 100 |
| Kontrolle | --- | 0 | 0 | 0 | 0 |

2.5 Im Okober wurde Wintergerste der Sorte "Caballar" ausgesät. Die Behandlung erfolgte Ende Mai des nächsten Jahres als die Saat zu spriessen beginnt und die Unkräuter sich in einem fortgeschrittenen Frühstadium befinden. Das Feld wird parzellenweise mit dem Wirkstoff einer der Wirkstoffmischungen gespritzt, einzelne Parzellen bleiben unbehandelt und dienen als Kontrolle. Der Versuch wird drei Monate später, Ende Mai begutachtet und die Schäden an der Gerste, dem Gras Lolium rigidum und den vorherrschenden Unkräutern Senecio gallicus und Veronica hederifolia bewertet. Die Resultate sind in der untenstehenden Tabelle zusammengefasst.

| Wirkstoff oder Wirkstoffkombination | Aufwandmenge g/Hektar | % Schaden | | | |
|---|---|---|---|---|---|
| | | Gerste "Caballar" | Lolium rigidum | Senecio gallicus | Veronica hederifolia |
| Kontrolle | --- | 0 | 0 | 0 | 0 |
| Chlortoluron + Terbutryn (6:1) | 1500 (1286 + 214) | 0 | 98 | 100 | 50 |
| Triasulfuron | 10 | 0 | 70 | 95 | 60 |
| Chlortoluron + Terbutryn + Triasulfuron | 800 (662,5 + 134,3 + 3,2) | 0 | 90 | 100 | 58 |
| Chlortoluron + Terbutryn + Triasulfuron | 1000 (828 + 168 + 4) | 0 | 95 | 100 | 68 |
| Chlortoluron + Terbutryn + Triasulfuron | 1200 (993,75 + 201,45 + 4,8) | 0 | 98 | 100 | 82 |

Auch in diesen Versuchen wurde eine verbesserte Unkrautkontrolle erreicht gegenüber Triasulfuron oder der bekannten Mittel Chlortoluron-Terbutryn 6:1. Um dies zu erreichen wurde 55-80 % der Aufwandmenge des Chlortoluron-Terbutryn Gemisches oder anteilmässig 32-48 % Triasulfuron verwendet.

## Ansprüche

1. Synergistisch wirkendes selektiv-herbizides Mittel für den Getreidebau, dadurch gekennzeichnet, dass es neben inerten flüssigen oder festen Zuschlags- und Trägerstoffen einschliesslich oberflächenaktiver Stoffe als Wirkstoff eine Kombination von N-(3-Chlor-4-methylphenyl)-N′-dimethylharnstoff, (Chlortoluron), 2-Methylthio-4-äthylamino-6-tert-butylamino-1,3,5-triazin (Terbutryn) sowie N-(2-Chloräthoxy)-phenylsulfonyl-N′-(4-methoxy-6-methyl-1,3,5-triazin-2-yl)harnstoff (Triasulfuron) im Verhältnis 100-300:20-60:1 enthält.

2. Mittel gemäss Anspruch 1, dadurch gekennzeichnet, dass es die Wirkstoffe Chlortoluron, Terbutryn und Triasulfuron im Verhältnis 200:40:1 enthält.

3. Verfahren zur Herstellung eines neuen, selektiv-herbiziden Mittels für den Getreideanbau, dadurch gekennzeichnet, dass man 100-300 Gewichtsteile N-(3′-Chlor-4′-methylphenyl)-N′-dimethylharnstoff (Chlortoluron) 20-60 Gewichtsteile 2-Methylthio-4-äthylamino-6-tert.butylamino-s-triazin (Terbutryn) und einen Teil N-(2-Chloräthoxy-phenylsulfonyl)-N′-(4-methoxy-6-methyl-1,3,5-triazin-2-yl)harnstoff (Triasulfuron) mit geeigneten festen und/oder flüssigen Zuschlags- und Trägerstoffen innig vermengt und vermahlt, zwecks besserer Aufnahme durch die Pflanzen oberflächenaktive Stoffe hinzufügt und mahlt und das Mittel in Streu- und Stäubemittel, Granulate und insbesondere in wasserdispergierbare Granulate überführt.

4. Verfahren gemäss Anspruch 3, dadurch gekennzeichnet, dass man etwa 5 Gewichtsteile Chlortoluron einen Gewichtsteil Terbutryn und 0,025 Teile Triasulfuron verwendet und so verfährt, dass nach Zugabe der Zuschlagstoffe und oberflächenaktiver Stoffe ein in Wasser dispergierbares Spritzpulver entsteht.

5. Verfahren nach Anspruch 3, dadurch gekennzeichnet, dass das Mittel ein wasserdispergierbares Granulat ist.

6. Verfahren gemäss Anspruch 3 oder 5, dadurch gekennzeichnet, dass man das Mittel nach dem Extrusions- Mischer- oder Sprühtrocknungsverfahren herstellt.

7. Verfahren nach Anspruch 5 oder 6, dadurch gekennzeichnet, dass die Komponenten bis zur Homogenität vermengt werden.

8. Verfahren nach Anspruch 5, 6 oder 7, dadurch gekennzeichnet, dass das Chlortoluron vorgemahlen wird und am Schluss zu den übrigen Komponenten zugegeben wird.

9. Verfahren nach einem der Ansprüche 5 bis 8, dadurch gekennzeichnet, dass das Mittel in einer Luftstrahlmühle fein gemahlen wird.

10. Verfahren nach einem der Ansprüche 5 bis 9, dadurch gekennzeichnet, dass die Rohgranulate in einem Wirbelschichttrockner oder einem Vakuumtrockenschrank bis zu einer Restfeuchtigkeit von unter 1,5 bis 3 % bei 40 bis 80° C getrocknet werden.

11. Verfahren zur Herstellung von weitgehend unkrautfreien Getreideanbauflächen und Getreidekulturen, dadurch gekennzeichnet, dass man ein mit Getreide angesätes Feld vor oder nach dem Auflaufen der Getreidepflanzen mit einem herbiziden Mittel behandelt, welches 5 Teile Chlortoluron pro Teil Terbutryn und 0,025 Teilen Triasulfuron neben üblichen Zuschlags- und Trägerstoffen sowie einem oberflächenaktiven Stoff enthält und die Menge des Mittels so wählt, dass die Gesamtkonzentration an Wirkstoffen 0,5 bis 2 kg pro Hektar Anbaufläche beträgt.

12. Verfahren zur selektiven Bekämpfung von Unkräutern in Getreidekulturen, dadurch gekennzeichnet, dass man die Kultur oder deren Anbaufläche pre- oder postemergent mit einer Menge von 0,5-2 kg pro Hektar mit einem herbiziden Mittel enthaltend ein Wirkstoffgemisch von 100-300 Teilen N-(3-Chlor-4-methylphenyl)-N′-dimethylharnstoff (Chlortoluron), 20-60 Teilen 2-Methylthio-4-äthylamino-6-tert-butylamino-1,3,5-triazin (Terbutryn), und einem Teil N-(2-Chloräthoxyphenylsulfonyl)-N′-(4-methoxy-6-methyl-1,3,5-triazin-2-yl)-harnstoff (Triasulfuron) behandelt.

13. Verfahren gemäss Anspruch 12, dadurch gekennzeichnet, dass das Wirkstoffverhältnis im herbiziden Mittel 200 Teile Chlortoluron zu 40 Teilen Terbutryn zu einem Teil Triasulfuron beträgt.

14. Verfahren gemäss Anspruch 12, dadurch gekennzeichnet, dass das Wirkstoffverhältnis im herbiziden Mittel 207 Teile Chlortoluron, 2042 Teilen Terbutryn zu einem Teil Triasulfuron beträgt.

15. Verfahren gemäss Anspruch 12, dadurch gekennzeichnet, dass die Aufwandmenge an Wirkstoffgemisch zwischen 0,6 und 1,5 kg pro Hektar liegt.

16. Verfahren gemäss Anspruch 12, dadurch gekennzeichnet, dass die Kultur Weizen ist.

17. Verfahren gemäss Anspruch 12, dadurch gekennzeichnet, dass die Kultur Gerste ist.